# EUROPÄISCHE PATENTANMELDUNG

(11) **EP 1 270 120 A1**
(43) Veröffentlichungstag der Anmeldung: **02.01.2003**
(21) Anmeldenummer: 02013610.7
(22) Anmeldetag: 19.06.2002
(51) Int. Cl.: B23B 31/16

(54) **Spannfutter**

(30) Priorität: 22.06.2001 DE 10129697
(71) Anmelder: Schunk GmbH & Co KG Fabrik für Spann- und Greifwerkzeuge, 74348 Lauffen (DE)
(72) Erfinder: Gulde, Siegfried, 88515 Langenenslingen (DE)
(74) Vertreter: Paul, Dieter-Alfred, Dipl.-Ing.

(57) **Zusammenfassung**

Die Erfindung beschreibt ein Spannfutter für Werkzeugmaschinen, insbesondere für Drehmaschinen, mit einem Futterkörper (2) und mehreren in Führungsnuten (3) des Futterkörpers (2) eingesetzten Spannbacken (4), die durch einen Antrieb radial zur Futterachse (A) verstellbar sind, wobei zu dem Antrieb Keilstangen (5) gehören, die in quer zu den Führungsnuten (3) verlaufenden Keilstangentaschen (6) des Futterkörpers (2) geradlinig bewegbar geführt sind und eine Verzahnung (7) aufweisen, die mit einer entsprechenden Gegenverzahnung (8) einer zugehörigen Spannbacke (4) in Eingriff steht, welche dadurch gekennzeichnet ist, daß die Keilstangen (5) an ihrer der Verzahnung (7) gegenüberliegenden Unterseite jeweils durch wenigstens zwei in Keilstangenlängsrichtung beabstandet voneinander angeordnete Gelenkelemente (9) flächig abgestützt sind, die Kippbewegungen der Keilstangen (5) gegenüber dem Futterkörper (2) unter Beibehaltung einer insbesondere flächigen Abstützung zulassen.

## Beschreibung

Die vorliegende Erfindung betrifft ein Spannfutter für Werkzeugmaschinen, insbesondere für Drehmaschinen, mit einem Futterkörper und mehreren in Führungsnuten des Futterkörpers eingesetzten Spannbacken, die durch einen Antrieb radial zur Futterachse verstellbar sind, wobei zu dem Antrieb Keilstangen gehören, die in quer zu den Führungsnuten verlaufenden Keilstangentaschen des Futterkörpers geradlinig bewegbar geführt sind und eine Verzahnung aufweisen, die mit einer entsprechenden Gegenverzahnung einer zugehörigen Spannbacke in Eingriff steht.

Spannfutter für Werkzeugmaschinen dieser Art sind bekannt und werden in der Praxis in erster Linie an Drehmaschinen eingesetzt, um die zu bearbeitenden Werkstücke zu spannen. Die herkömmlichen Spannfutter bestehen dabei aus einem Futterkörper, der eine zentrale Aufnahmeöffnung für Werkzeuge besitzt, sowie aus mehreren Spannbacken, die in Führungsnuten des Futterkörpers radial bewegbar sind. Neben manuell betätigbaren Handspannfuttern werden in komplexeren Werkzeugmaschinen, insbesondere in programmgesteuerten Drehautomaten, häufig sogenannte Kraftspannfutter eingesetzt, bei denen die von den Spannbacken auf das Werkstück ausgeübten Spannkräfte motorisch oder hydraulisch erzeugt werden. Aus der DE-A 43 35 896 ist beispielsweise ein Kraftspannfutter bekannt, das nach dem Prinzip sich geradlinig bewegender Keilstangen arbeitet, die in quer zu den Führungsnuten für die Spannbacken vorgesehenen Keilstangentaschen bewegbar geführt sind. Die Keilstangen, welche durch einen im Futterkörper angeordneten Betätigungskolben (Futterkolben) angetrieben werden, sind mit den Spannbacken über Schrägverzahnungen derart gekoppelt, daß die Bewegungen der Keilstangen in den Keilstangentaschen in radiale Spannbewegungen der Spannbacken umgesetzt werden.

Ein Problem, das bei den bekannten Spannfuttern immer wieder auftritt, besteht darin, daß die Keilstangen wegen der einseitigen Belastung durch den Betätigungskolben in der Keilstangentasche, in welcher sie laufen, verkippen und dabei verkanten. Hierdurch kann es zu teilweise nicht unerheblichen Verlusten in der Kinematik und zu Verschleißerscheinungen an den Keilstangen sowie den Seitenwänden der Keilstangentaschen kommen.

Aufgabe der Erfindung ist es daher, ein Spannfutter der eingangs genannten Art so auszubilden, daß die Antriebsmechanik einen verbesserten Wirkungsgrad besitzt und der im Bereich der Keilstangen und Keilstangentaschen auftretende Verschleiß auch ohne häufiges Nachschmieren gering ist.

Diese Aufgabe ist erfindungsgemäß dadurch gelöst, daß die Keilstangen an ihrer der Verzahnung gegenüberliegenden Unterseite jeweils durch wenigstens zwei in Keilstangenlängsrichtung beabstandet voneinander angeordnete Gelenkelemente flächig abgestützt sind, die Kippbewegungen der Keilstangen gegenüber dem Futterkörper unter Beibehaltung einer insbesondere flächigen Abstützung zulassen. Der Erfindung liegt somit die Überlegung zugrunde, die Keilstangen während des gesamten Betriebs von der Unterseite her abzustützen. Als Gelenkelemente können beispielsweise Kugeln verwendet werden, welche die Keilstangen punktförmig abstützen und mehrachsige Kippbewegungen von diesen zulassen. Auch ist der Einsatz von Zylinderstiften für eine linienförmige Abstützung denkbar. Gemäß einer bevorzugten Ausführungsform sind Gelenkelemente vorgesehen, die so ausgestaltet sind, daß sie Kippbewegungen, welche die Keilstangen im Betrieb ausführen, folgen können und dabei eine flächige Unterstützung gewährleisten. Überraschenerweise hat sich herausgestellt, daß durch eine solche insbesondere flächige Abstützung der Keilstangen mittels Gelenkelementen die Laufstabilität der Keilstangen in den Keilstangentaschen deutlich erhöht werden kann mit der Folge, daß der Wirkungsgrad der Antriebsmechanik verbessert und der auftretende Verschleiß gering ist.

Gemäß einer Ausführungsform der Erfindung ist dabei vorgesehen, daß die Gelenkelemente an dem Futterkörper, insbesondere dem Deckel des Futterkörpers fixiert sind und jeweils eine Auflagefläche zur Abstützung der Keilstangen aufweisen, wobei bei dieser Ausführungsform die Keilstangen entweder unmittelbar auf den Auflageflächen der Gelenkelemente aufliegen können oder zwischen den Keilstangen und den Auflageflächen eine Zwischenplatte vorgesehen sein kann. Die letztere Ausführungsform hat den Vorteil, daß die Keilstangen ständig vollflächig an ihrer Unterseite durch die Zwischenplatte abgestützt werden.

In umgekehrter Weise ist es auch möglich, die Gelenkelemente an den Keilstangenelementen zu fixieren, wobei dann die Auflageflächen jeweils flächig an einer Gegenfläche des Futterkörpers, insbesondere des Deckels des Futterkörpers, anliegen.

In bevorzugter Weise sind die Gelenkelemente jeweils in den Futterkörper bzw. die Keilstangen parallel zur Achse des Futterkörpers eingeschraubt. Diese Ausgestaltung bietet den Vorteil, daß die Gelenkelemente auf einfache Weise ausgewechselt werden können und insbesondere auch eine Justierung in Futterachsenrichtung möglich ist.

In weiterer Ausgestaltung der Erfindung ist vorgesehen, daß die Gelenkelemente jeweils einen am Futterkörper oder einer Keilstange fixierten Grundkörper und ein mit dem Grundkörper gelenkig verbundenes und die Abstützfläche aufweisendes Abstützelement besitzen. Hierbei kann der Grundkörper eine sphärische Aufnahme bilden und das Abstützelement einen zu der Aufnahme komplementär ausgebildeten Gelenkabschnitt besitzen, der in die Aufnahme unter Bildung eines Kugelgelenks eingesetzt ist. Solche Gelenkelemente sind als sogenannte Gelenkauflagen von der Spann- und Automationssysteme, Normaltechnik GmbH oder auch als sogenannte Pendelauflagen von der Firma norelem Normelemente als Standardbauteile erhältlich.

Hinsichtlich weiterer vorteilhafter Ausgestaltungen der Erfindung wird auf die Unteransprüche sowie die nachfolgende Beschreibung von zwei Ausführungsbeispielen unter Bezugnahme auf die beiliegende Zeichnung verwiesen. In der Zeichnung zeigt
- Figur 1: eine erste Ausführungsform eines erfindungsgemäßen Spannfutters in Draufsicht,
- Figur 2: das Spannfutter aus Figur 1 im Schnitt H-H,
- Figur 3: das Spannfutter aus Figur 1 im Schnitt G-G,
- Figur 4: das Spannfutter aus Figur 1 in Explosionsansicht,
- Figur 5: eine zweite Ausführungsform eines erfindungsgemäßen Spannfutters in Explosionsansicht und
- Figur 6: ein Gelenkelement für den Einsatz in den erfindungsgemäßen Spannfuttern.

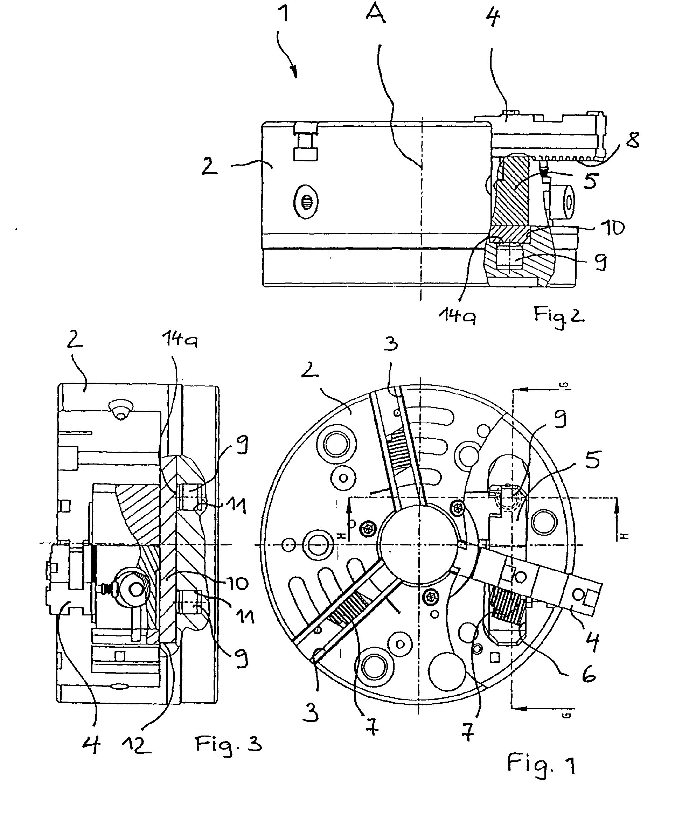

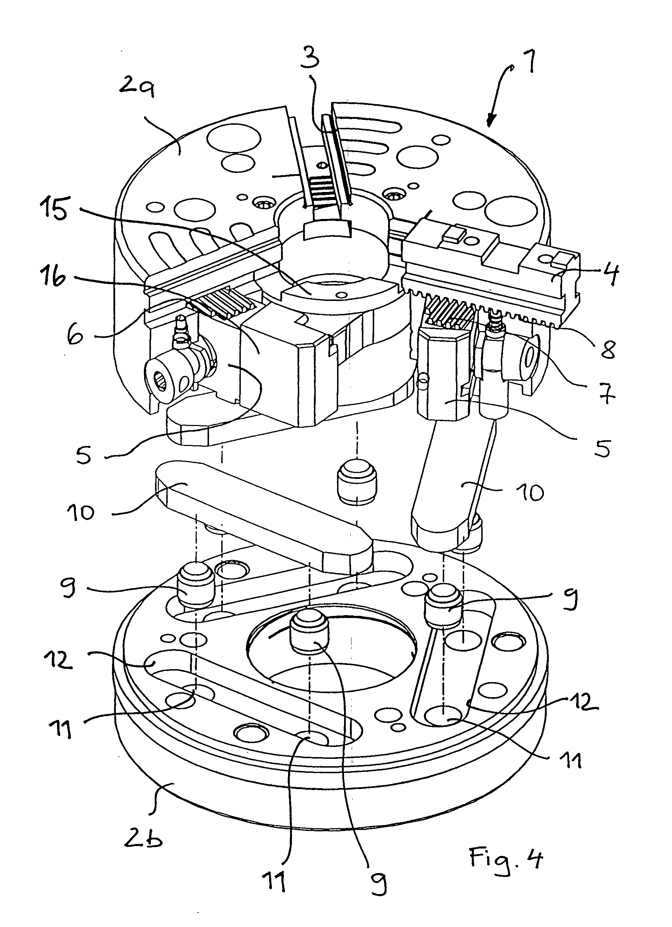

In den Figuren 1 bis 4 ist eine erste Ausführungsform eines erfindungsgemäßen Spannfutters dargestellt, wie es zum Spannen von Werkstücken an Drehmaschinen verwendet wird. Zu dem Spannfutter 1, das als Kraftspannfutter ausgebildet ist, gehört ein aus einem Gehäuse 2a und einem Deckel 2b gebildeter Futterkörper 2, der eine zylindrische Grundform besitzt und an der nicht dargestellten Spindel einer Werkzeugmaschine befestigt werden kann. An der einen Stirnseite des Futterkörpers 2 sind drei radiale Führungsnuten 3 vorgesehen, die gleichmäßig über den Umfang verteilt, d.h. mit jeweils 120° Versatz gegeneinander, angeordnet sind. In die Führungsnuten 3 sind Spannbacken 4 eingesetzt, die jeweils aus einer Grundbakke und einer daran anschraubbaren Aufsatzbacke bestehen. In der Zeichnung ist nur die Grundbacke einer Spannbacke 4 dargestellt. Die drei Spannbacken 4 können durch einen Antrieb zum Spannen und Lösen von Werkstücken nach innen und außen verstellt werden.

Zu diesem Antrieb gehören drei Keilstangen 5, die jeweils einer der Spannbacken 4 zugeordnet und in Keilstangentaschen 6 des Futterkörpers 1 quer zu den Führungsnuten 3 geführt sind und durch eine Axialbewegung eines Futterkolbens 15 über zwischengeschaltete Winkelelemente 16 in an sich bekannter und daher nicht im einzelnen beschriebener Weise betätigt werden können. Die Keilstangen 5 weisen jeweils eine Schrägverzahnung 7 an ihrer Oberseite auf, die mit einer entsprechenden Gegenverzahnung 8 an der zugeordneten Spannbacke 4 in Eingriff steht, um eine Bewegung der Keilstange 5 in der zugehörigen Keilstangentasche 6 in eine radiale Bewegung der Spannbacke 4 umzusetzen.

In den Keilstangentaschen 6 sind die Keilstangen 5 seitlich mit einem gewissen Spiel geführt, und an ihrer der Verzahnung 7 gegenüberliegenden Unterseite liegen die Keilstangen 5 jeweils vollflächig auf einer Zwischenplatte 10 auf, die in einer korrespondierenden Ausnehmung 12 des Futterkörperdeckels 2b positioniert ist. Die Zwischenplatten 10 wiederum liegen jeweils auf zwei Gelenkelementen 9 auf, die in Sackbohrungen 11 am Grund der Ausnehmungen 12 eingeschraubt sind.

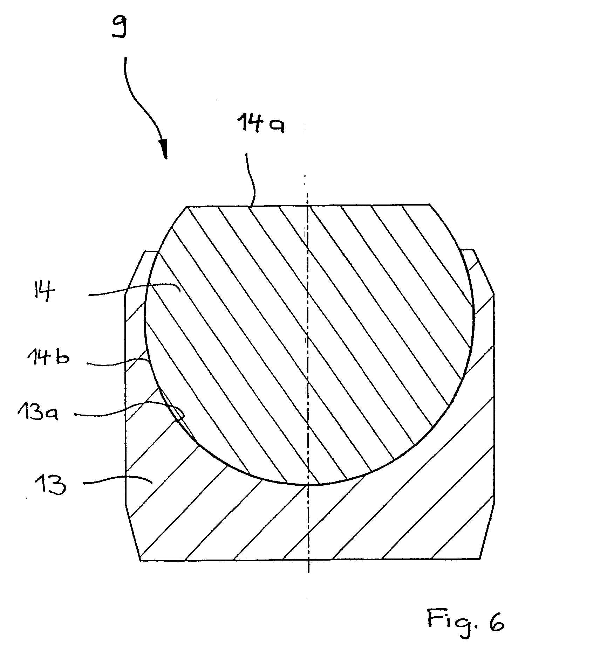

Wie in Figur 6 erkennbar ist, bestehen die Gelenkelemente 9 jeweils aus zwei Teilen, nämlich einem Grundkörper 13, der in den Deckel 2b eingeschraubt ist und hierzu ein nicht dargestelltes Außengewinde aufweist, und einem Abstützelement 14, das eine Abstützfläche 14a aufweist und mit dem Grundkörper 13 gelenkig verbunden ist. Konkret besitzt der Grundkörper 13 eine sphärische Aufnahme 13a und das Abstützelement 14 einen zu der Aufnahme 13a komplementär ausgebildeten Kugelkopfabschnitt 14b, der in die Aufnahme 13a unter Bildung eines Kugelgelenks eingesetzt ist. Die Ausbildung ist dabei so getroffen, daß die Aufnahme 13a den Kugelkopfabschnitt 14b soweit umschließt, daß sich das Abstützelement 14 nicht von dem Grundkörper 13 lösen kann, aber die Abstützfläche 14a einen gewissen Abstand von der Grundkörperoberseite hat, so daß das Abstützelement 14 gegenüber dem Grundkörper 13 verkippt werden kann, ohne daß ein darauf aufliegendes Bauteil mit dem Grundkörper 13 in Berührung kommt.

Wie insbesondere die Figuren 2 und 3 deutlich zeigen, liegen die Zwischenplatten 10 im montierten Zustand jeweils auf den Abstützflächen 14a der Gelenkelemente 9 auf, und liegen die Keilstangen 5 wiederum flächig auf den Zwischenplatten 10 auf.

Wenn nun im Betrieb die Keilstangen 5 zur Betätigung des Spannfutters 1 bewegt werden und dabei verkippen, geht hierdurch die flächige Abstützung an der Unterseite nicht verloren, da die Gelenkelemente 9 einer solchen Kippbewegung folgen können, indem das Abstützelement 14 gegenüber dem Grundkörper 13 schwenkt. Dies hat zur Folge, daß stets ein flächiger Kontakt zwischen den Keilstangen 5 und den Zwischenplatten 10 einerseits und den Zwischenplatten 10 und den Abstützflächen 14a der Gelenkelemente 9 andererseits gewährleistet ist. Versuche haben gezeigt, daß durch diese flächige Abstützung der Wirkungsgrad der Getriebeanordnung verbessert und verschleißbedingte Abnutzungen an den Keilstangen 5 sowie den Seitenflächen der Keilstangentaschen 6 verringert werden können.

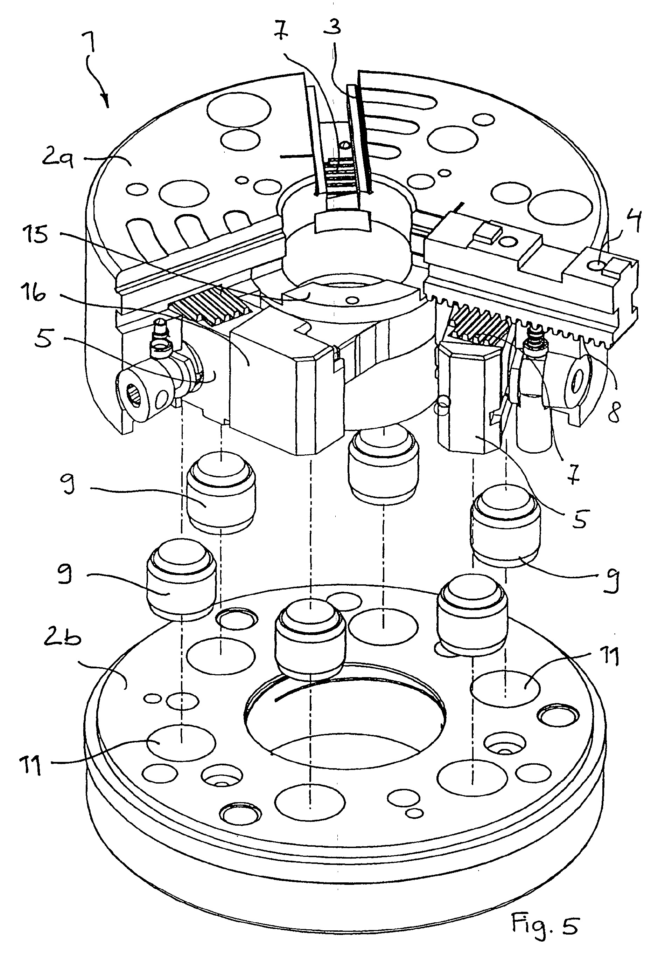

In Figur 5 ist eine zweite Ausführungsform eines erfindungsgemäßen Spannfutters dargestellt. Diese Ausführungsform unterscheidet sich von der in den Figuren 1 bis 4 dargestellten und zuvor beschriebenen Ausführungsform nur dadurch, daß die Keilstangen 5 direkt auf den Abstützflächen 14a der Gelenkelemente 9 aufliegen und nicht wie bei der zuvor beschriebenen Ausführungsform eine Zwischenplatte 10 vorgesehen ist.

## Patentansprüche

1. Spannfutter für Werkzeugmaschinen, insbesondere für Drehmaschinen, mit einem Futterkörper (2) und mehreren in Führungsnuten (3) des Futterkörpers (2) eingesetzten Spannbacken (4), die durch einen Antrieb radial zur Futterachse (A) verstellbar sind, wobei zu dem Antrieb Keilstangen (5) gehören, die in quer zu den Führungsnuten (3) verlaufenden Keilstangentaschen (6) des Futterkörpers (2) geradlinig bewegbar geführt sind und eine Verzahnung (7) aufweisen, die mit einer entsprechenden Gegenverzahnung (8) einer zugehörigen Spannbacke (4) in Eingriff steht, **dadurch gekennzeichnet, daß** die Keilstangen (5) an ihrer der Verzahnung (7) gegenüberliegenden Unterseite jeweils durch wenigstens zwei in Keilstangenlängsrichtung beabstandet voneinander angeordnete Gelenkelemente (9) flächig abgestützt sind, die Kippbewegungen der Keilstangen (5) gegenüber dem Futterkörper (2) unter Beibehaltung einer insbesondere flächigen Abstützung zulassen.

2. Spannfutter nach Anspruch 1, **dadurch gekennzeichnet, daß** die Gelenkelemente (9) an dem Futterkörper (2), insbesondere dem Deckel (2b) des Futterkörpers (2) fixiert sind und jeweils eine Auflagefläche (14a) zur Abstützung der Keilstange (5) aufweisen.

3. Spannfutter nach Anspruch 2, **dadurch gekennzeichnet, daß** die Keilstangen (5) jeweils unmittelbar auf den Auflageflächen (14a) der Gelenkelemente (9) aufliegen.

4. Spannfutter nach Anspruch 2, **dadurch gekennzeichnet, daß** die Keilstangen (5) jeweils auf einer Zwischenplatte (10) flächig aufliegen und die Zwischenplatte (10) auf den Auflageflächen (14a) der Gelenkelemente (9) flächig abgestützt ist.

5. Spannfutter nach Anspruch 1, **dadurch gekennzeichnet, daß** die Gelenkelemente (9) an den Keilstangenelementen (5) fixiert sind und die Auflageflächen (14a) flächig an einer Gegenfläche des Futterkörpers (2), insbesondere des Deckels (2b) des Futterkörpers (2), anliegen.

6. Spannfutter nach einem der vorherigen Ansprüche, **dadurch gekennzeichnet, daß** die Gelenkelemente (9) jeweils in den Futterkörper (2) bzw. die Keilstangen (5) eingeschraubt sind.

7. Spannfutter nach einem der vorherigen Ansprüche, **dadurch gekennzeichnet, daß** die Gelenkelemente (9) jeweils einen am Futterkörper (2) oder der Keilstange (5) fixierten Grundkörper (13) und ein mit dem Grundkörper (13) gelenkig verbundenes und die Abstützfläche (14a) aufweisendes Abstützelement (14) besitzt.

8. Spannfutter nach Anspruch 7, **dadurch gekennzeichnet, daß** der Grundkörper (13) eine sphärische Aufnahme (13a) besitzt und das Abstützelement (14) eine zu der Aufnahme komplementär ausgebildeten Gelenkabschnitt (14b) besitzt, der in die Aufnahme unter Bildung eines Kugelgelenks eingesetzt ist.
